Europäisches Patentamt

(19) European Patent Office

Office européen des brevets

(11) Numéro de publication: **0 008 977**
**A1**

(12) **DEMANDE DE BREVET EUROPEEN**

(21) Numéro de dépôt: **79400584.3**

(22) Date de dépôt: **21.08.79**

(51) Int. Cl.³: **G 01 N 27/16**

(30) Priorité: **25.08.78 FR 7824663**

(43) Date de publication de la demande:
**19.03.80 Bulletin 80/6**

(84) Etats Contractants Désignés:
**BE DE GB IT NL**

(71) Demandeur: **Etablissement public dit:**
**CHARBONNAGES DE FRANCE**
**9, Avenue Percier**
**F-75008 Paris(FR)**

(72) Inventeur: **Boutonnat, Maurice**
**Route des Carrières**
**F-60270 Gouvieux (Oise)(FR)**

(74) Mandataire: **Ducas, Michel Louis Marie et al,**
**Cabinet Boettcher 23, rue La Boétie**
**F-75008 Paris(FR)**

(54) Appareil de mesure d'un constituant d'une atmosphère.

(57) L'invention concerne un grisoumètre ou explosimètre portatif dans lequel une cellule de mesure à filaments 3, 4 est disposée dans un cabochon 2 en métal fritté.

Pour éviter que l'opérateur ne procède à une mesure avant le temps de diffusion de l'atmosphère dans le cabochon 2, l'appareil est muni d'une base de temps 17, déclenchée par la fermeture d'un contacteur 7 par l'opérateur, qui retarde l'alimentation de la cellule par son circuit d'alimentation 6 et déclenche ensuite, en séquence, l'intervention du circuit de mesure 10, la mise en mémoire 14 de la mesure et son affichage, la coupure du circuit d'alimentation 6 et l'allumage d'une lampe témoin 18 de fin de séquence.

FIG.2

EP 0 008 977 A1

- 1 -

Appareil de mesure d'un constituant d'une atmosphère

L'invention concerne un appareil de mesure et/ou surveillance du constituant d'une atmosphère au moyen d'un élément thermo-sensible alimenté électriquement disposé dans une cellule de mesure à paroi poreuse.

On connaît dans le commerce des appareils de mesure et/ou surveillance, tels qu'explosimètres, méthano-mètres, catharomètres ou autres doseurs de constituants d'une atmosphère, dans lesquels une cellule de mesure, comportant au moins un filament doseur ou élément sensible chauffé électriquement, est disposée dans l'atmosphère. Dans les applications connues d'appareils automatiques installés à demeure, on sait que l'indication de l'appareil indicateur affichant la valeur de la teneur à mesurer est affectée d'un retard connu dû à la diffusion de l'atmosphère à travers la paroi poreuse.

Ce retard ne constitue pas, en général, un grave inconvénient, car on limite l'emploi de tels appareils à la surveillance de lieux où la variation est lente et, en tout cas, normalement, loin du seuil dangereux, l'important étant de détecter les variations en hausse de teneurs, dans le cas de l'explosi-métrie, par exemple.

2

Par ailleurs, on connaît, par le brevet US 4 002 429, un appareil à mesures intermittentes, dans lequel on retarde le temps de mesure par rapport à l'instant $T_o$ de mise sous tension électrique simultanée à l'introduction de gaz à doser. On connaît, par le brevet français N° 2 337 339, un —————————— appareil à interrogations intermittentes, où la mise en mémoire permet une lecture permanente de la teneur en gaz inflammable. Si on appliquait de tels dispositifs à un appareil portatif à cellule à paroi poreuse, il en résulterait des inconvénients qui seront exposés plus loin.

On rappellera d'abord qu'un double avantage important de la cellule à paroi poreuse est que la paroi peut être réalisée en métal fritté de grande résistance mécanique pour la protection du filament fragile et qu'elle dispense de moyen mécanique de pompage entre l'atmosphère et la cellule de mesure.

Si on veut profiter de tels avantages précédents pour un appareil de mesure manuel, il faut donner à l'opérateur des instructions pour qu'il diffère la lecture jusqu'à expiration du temps de diffusion de l'atmosphère dans la cellule.

Mais si l'opérateur n'applique pas consciencieusement les instructions, ou s'il est distrait, il arrivera qu'il n'observe pas un temps d'attente suffisant pour obtenir une bonne diffusion gazeuse. Il en résultera des mesures erronées.

Le but de l'invention est de proposer un nouvel appareil évitant un tel inconvénient et garantissant que la mesure est faite à l'instant le plus approprié à

3

la fois pour avoir une bonne diffusion gazeuse et la lecture la plus précise possible.

Ces buts sont atteints, selon l'invention, dans un appareil de mesure et/ou surveillance de la teneur d'un constituant d'une atmosphère au moyen d'un élément sensible à ladite teneur, ledit élément sensible étant disposé dans une cellule de mesure dont l'espace intérieur est mis, pour la mesure de ladite teneur, en communication avec l'atmosphère à travers une paroi poreuse, ledit élément sensible pouvant être connecté dans un circuit d'alimentation électrique et dans un circuit de mesure électrique délivrant un signal de valeur fonction d'une propriété électrique dudit élément sensible variant en fonction de la teneur dudit constituant, ledit appareil comportant

- un dispositif de mise en mémoire de la valeur du signal, et

- un dispositif d'affichage de la valeur en mémoire, par le fait qu'il comporte en outre une base de temps déclenchable comportant des moyens de déclenchements séquentiels des opérations suivantes :

- connection retardée de l'élément sensible dans le circuit de mesure électrique,

- et mise en mémoire de la dernière valeur du signal.

Selon un mode de réalisation préféré la base de temps comporte un moyen de déclenchement retardé de l'opération de connection de l'élément sensible dans le circuit d'alimentation électrique et la connection de l'élément sensible dans le circuit de mesure est retardée par rapport à sa connection dans le circuit d'alimentation.

4

Toujours selon un mode de réalisation préféré, la base de temps comporte des moyens de limitation du temps de connection de l'élément sensible dans le circuit d'alimentation et/ou le circuit de mesure.

Dans un appareil portatif, il est avantageux que la base de temps soit déclenchable par commande manuelle et qu'il comporte des moyens d'interruption ou d'arrêt de la séquence des opérations déclenchées par la base de temps.

D'autres caractéristiques et avantages ressortiront de la description, qui sera donnée ci-après uniquement à titre d'exemple, d'un mode de réalisation de l'invention. On se reportera aux dessins annexés, dans lesquels :

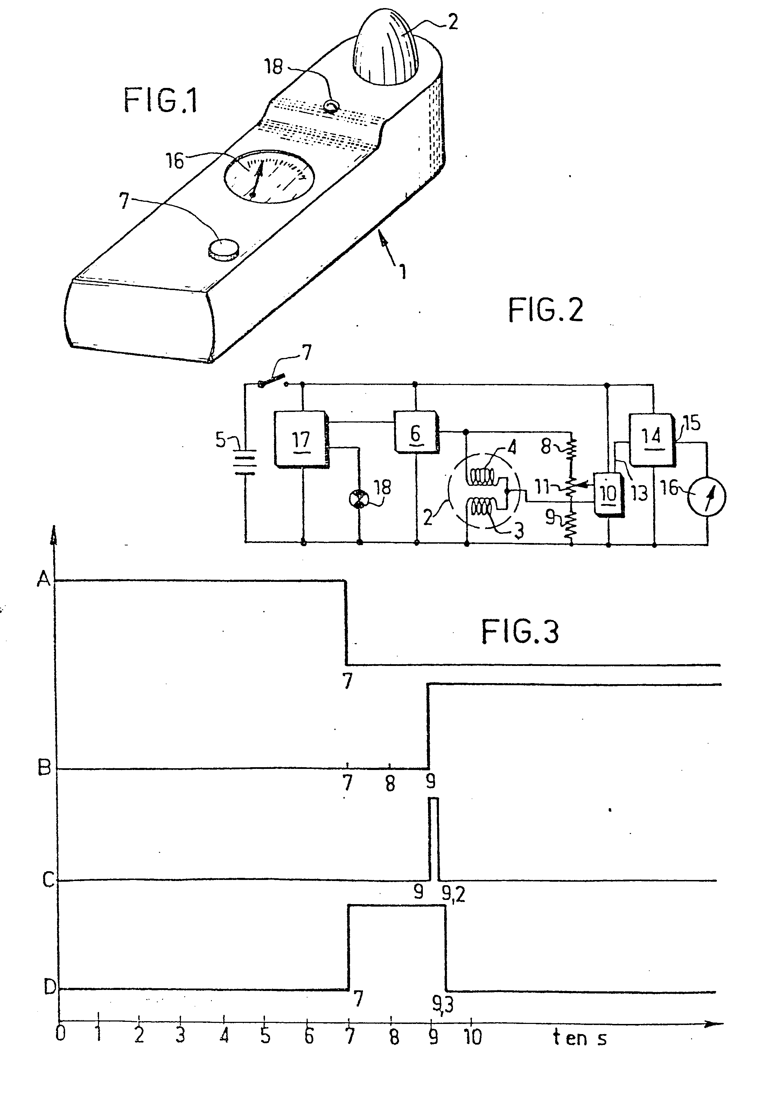

- la figure 1 est une vue perspective d'ensemble d'un méthanomètre ou explosimètre portatif à accumulateur incorporé et à commande manuelle,
- la figure 2 est le schéma de montage électrique de l'appareil de la figure 1,
- la figure 3 est le diagramme de temps des opérations commandées par la base de temps incorporée dans l'appareil.

Un appareil de l'invention comprend un boîtier 1 qui présente un cabochon en métal fritté 2 à l'intérieur duquel sont disposés, de façon connue en soi, un filament doseur 3 et un filament compensateur 4 alimentés, de façon connue, par une batterie électrique 5 à travers un régulateur de tension 6 et un contacteur 7. Ces filaments sont montés dans un pont de mesure comportant deux résistances fixes 8 et 9 et raccordé à un circuit de mesure 10 à travers un potentiomètre

5

11, toujours comme il est connu en soi. Le circuit de mesure délivre à une borne 13 un signal de mesure.

Selon l'invention, l'appareil comporte un dispositif de mise en mémoire 14 connecté à la borne 13 du circuit de mesure 10. A la borne de sortie 15 du dispositif de mise en mémoire 14 est connecté un dispositif galvanométrique d'affichage 16 analogique ou numérique de la valeur en mémoire.

L'appareil comporte en outre une base de temps 17 qui délivre des signaux de temps pouvant commander en séquence la connection du circuit d'alimentation 6 du pont de mesure en courant d'alimentation électrique des filaments 3 et 4, la connection du pont de mesure dans le circuit de mesure 10, la mise en mémoire dans la mémoire 14 de la valeur du signal, la déconnection du pont du circuit de mesure 10, puis la déconnection du pont du circuit d'alimentation.

Cette séquence d'opérations est déclenchée automatiquement par la base de temps 17 dès la fermeture du contacteur 7 par commande manuelle et se déroule jusqu'à la mise en mémoire et à l'affichage de la valeur aussi longtemps qu'on laisse fermé le contacteur 7. En relâchant le contacteur 7, celui-ci s'ouvre et l'appareil est prêt pour une autre séquence de mesure.

L'appareil comporte en outre une lampe témoin 18 dont l'allumage est commandé par la base de temps en même temps que la mise en mémoire et l'affichage, pour avertir l'opérateur que la séquence de mesure est terminée et qu'il peut lire la valeur affichée.

On voit que l'appareil présente les avantages qu'on s'était proposé de lui conférer. Il est facile à un opérateur de porter l'appareil dans un endroit à portée de main, une cloche au toit d'une mine ou d'une galerie ou une faille, pour y mesurer avec sûreté la teneur en grisou ou autre gaz inflammable, la valeur de cette teneur restant en mémoire aussi longtemps qu'on ne relâche pas le contacteur 7.

Eventuellement, l'appareil peut être porté à l'extrémité d'une canne, pourvu qu'un second contacteur monté en parallèle avec le contacteur 7 soit prévu sur la canne, par exemple grâce à un raccord électrique intégré dans le raccord de la canne et de l'appareil.

La figure 4 montre un diagramme de temps des opérations commandées sur un appareil réalisé par le demandeur. On a porté en abscisse le temps t en secondes. L'instant 0 est supposé être celui où on déclenche la base de temps 17 par fermeture du contacteur 7. Le tracé A correspond au temps de diffusion, pendant lequel, par construction, la base de temps ne déclenche rien, ici 7s. Il est possible d'utiliser ce temps mort à contrôler la tension de la batterie 5 en prévoyant que la base de temps commande une opération de connection du dispositif galvanométrique 16 et d'affichage de la tension pendant ce temps.

Le tracé D correspond à la mise sous tension du pont de mesure, ici de 7 à 9,3 s.

Le tracé C correspond à la mise en connection du pont de mesure dans le circuit de mesure, ici de 9 à 9,2 s, c'est-à-dire à la fin du temps de mise sous tension.

7

Le tracé B correspond à la mise en connection du circuit de mesure avec la mémoire, ici à 9 s.

La fin du palier D, c'est-à-dire à 9,3 s, correspond
à l'allumage de la lampe témoin indiquant que la séquence est achevée et que l'opérateur peut effectuer
la lecture.

1

Revendications de brevet

1. Appareil de mesure et/ou surveillance de la teneur d'un constituant d'une atmosphère au moyen d'un élément sensible à ladite teneur, ledit élément sensible étant disposé dans une cellule de mesure dont l'espace intérieur est mis, pour la mesure de ladite teneur, en communication avec l'atmosphère à travers une paroi poreuse, ledit élément sensible pouvant être connecté dans un circuit d'alimentation électrique et dans un circuit de mesure électrique délivrant un signal de valeur fonction d'une propriété électrique dudit élément sensible variant en fonction de la teneur dudit constituant, ledit appareil comportant

- un dispositif de mise en mémoire (14) de la valeur du signal, et
- un dispositif d'affichage (16) de la valeur en mémoire,

caractérisé en ce qu'il comporte en outre une base de temps déclenchable (17) comportant des moyens de déclenchements séquentiels des opérations suivantes :
- connection retardée de l'élément sensible (3, 4) dans le circuit de mesure électrique (10), et
- mise en mémoire (14) de la dernière valeur du signal.

2. Appareil selon la revendication 1, caractérisé en ce que la base de temps (17) comporte un moyen de déclenchement retardé de l'opération de connection de l'élément sensible (3, 4) dans le circuit d'alimentation électrique (6).

3. Appareil selon la revendication 2, caractérisé en

0008977

2

ce que la connection de l'élément sensible (3, 4)
dans le circuit de mesure (10) est retardée par rapport à sa connection dans le circuit d'alimentation
(6).

4. Appareil selon l'une quelconque des revendications
1 à 3, caractérisé en ce que la base de temps comporte des moyens de limitation du temps de connection
de l'élément sensible (3, 4) dans le circuit d'alimentation (6) et/ou le circuit de mesure (10).

5. Appareil selon l'une quelconque des revendications 1 à 4, caractérisé en ce que la base de temps
(17) est déclenchable par commande manuelle (7).

6. Appareil selon la revendication 5, caractérisé en
ce qu'il comporte des moyens d'interruption ou d'arrêt (7) de la séquence des opérations déclenchées
par la base de temps.

7. Appareil selon l'une quelconque des revendications
1 à 6, caractérisé en ce qu'il comporte des moyens
d'affichage (18) de l'état de déclenchement d'au moins
l'une des opérations.

8. Appareil selon la revendication 7, caractérisé en
ce que l'opération affichable est la mise en mémoire
(14) de la dernière valeur du signal et/ou l'affichage de ladite valeur.

9. Appareil selon l'une quelconque des revendications
1 à 8, caractérisé en ce que la base de temps comporte des moyens de connection de la source de courant
(5) du circuit d'alimentation électrique ou dispositif d'affichage (16) et d'affichage de la tension de
ladite source (5) avant connection de l'élément sensible (3,4) dans le circuit d'alimentation (6).

0008977

FIG.1

FIG.2

FIG.3

t en s

**Office européen des brevets**

**RAPPORT DE RECHERCHE EUROPEENNE**

EP 79 40 0584

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernee | |
| | US - A - 4 002 429 (T. BARTOVSKY)<br>* Colonne 2, ligne 29; de colonne 4, ligne 9; figures 1-3 *<br>-- | 1,3-5 | G 01 N 27/16 |
| | FR - A - 2 356 135 (AUER GESELLSCHAFT)<br>* Page 3, lignes 9-31; figures *<br>-- | 1,3-5 | |
| | FR - A - 2 337 339 (GENERAL MONITORS)<br>* Page 3, ligne 1 - page 4, ligne 31; figures *<br>-- | 1,8 | **DOMAINES TECHNIQUES RECHERCHES (Int. Cl. ³)**<br><br>G 01 N 27/16<br>G 01 N 33/00<br>E 21 F 17/18 |
| A | FR - A - 1 463 341 (R. HUBNER)<br>* En entier *<br>-- | 1 | |
| A | GB - A - 1 155 481 (CHARBONNAGES DE FRANCE)<br>* En entier *<br>-- | 1 | |
| A | US - A - 3 347 635 (J. MCKEE)<br>* En entier *<br>---- | 1 | **CATEGORIE DES DOCUMENTS CITES**<br><br>X: particulièrement pertinent<br>A: arrière-plan technologique<br>O: divulgation non-écrite<br>P: document intercalaire<br>T: theorie ou principe à la base de l'invention<br>E: demande faisant interférence<br>D: document cité dans la demande<br>L: document cite pour d'autres raisons<br><br>&: membre de la même famille, document correspondant |

Le present rapport de recherche a ete etabli pour toutes les revendications

| Lieu de la recherche | Date d'achevement de la recherche | Examinateur |
|---|---|---|
| La Haye | 03-12-1979 | DUCHATELLIER |

OEB Form 1503.1   06.78